# EUROPEAN PATENT SPECIFICATION

(11) **EP 3 613 524 B1**
(45) Date of publication and mention of the grant of the patent: **17.03.2021**
(21) Application number: 19382717.7
(22) Date of filing: 20.08.2019
(51) Int. Cl.: B23B 25/06, B23B 5/28

(54) **CALIBRATION STANDARD FOR UNDERFLOOR WHEEL LATHES**
KALIBRIERSTANDARD FÜR UNTERFLURRADDREHMASCHINEN
NORME D'ÉTALONNAGE POUR DES TOURS À ESSIEUX MONTÉS EN FOSSE

(30) Priority: 22.08.2018 ES 201831303 U
(43) Date of publication of application: 26.02.2020
(73) Proprietor: Renfe Operadora, Entidad Publica Empresarial, 28034 Madrid (ES)
(72) Inventor: ANUBLA LUCIA, Eugenio Antonio, 28034 Madrid (ES); VELA DÍAZ, Cristina, 28034 Madrid (ES); GARCÍA RODRÍGUEZ, Alonso Fco., 28034 Madrid (ES); REDONDO BUENO, Carlos, 28034 Madrid (ES)
(74) Representative: Pons Ariño, Angel

(56) References cited:
- ES-A1- 2 459 243
- ES-A2- 2 396 386

## Description

### OBJECT OF THE INVENTION

The present invention falls within the technical field of devices for reconditioning wheels of railway vehicles, and particularly relates to an axle standard for performing the prior calibration of an underfloor wheel lathe, said axle standard being adjustable to different track gauges.

### BACKGROUND OF THE INVENTION

Within the technical sector of railway maintenance, underfloor wheel lathes are known as a device for regenerating the profiles of the train wheels, which are subjected to intense wear and deformation coming from the contact and friction produced between the wheel and the rail when used. Thanks to the underfloor wheel lathe, these regeneration operations using lathing are performed without needing to disassemble the axles of the train An example of an underfloor wheel lathe is known from ES 2 396 386.

Moreover, a track gauge is known as the distance between the internal faces of the parallel rails making up the track, measured 14 mm beneath the running surface of the rail. In the Spanish railway network, three main track gauges coexist: the Iberian gauge, with a gauge of 1668 mm, the European gauge, with a gauge of 1435 mm, and the metric gauge, with a gauge of 1000 mm. The devices, which are automatic or semi-automatic and are known as gauge changers, enable the track gauge of a railway vehicle to be modified, which prevents axles from needing to be transferred or changed between lines with different gauges.

As a step prior to lathing a worn-out train wheel profile, it is necessary to perform a calibration of the underfloor wheel lathe, for which the aforementioned axle standard is used. Presently, railway axles which are not suitable for use in trains or commercial locomotives are used for calibrating underfloor wheel lathes, which axles are calibrated to be used as an axle standard by means of a height indicator, also known as a three-dimensional marking gauge. The axle standard thus created is subject to a calibration check by law every three years, and weighs around 1,300-1,500 kg.

Currently, there are about 30 underfloor wheel lathes installed in Spain. Taking into account that for each of them there is an associated axle standard, there are around 30 axle standards, of which only 8 have measurement registrations and are subject to periodic calibration. The remaining 22 axles are used for verifying and checking the underfloor wheel lathe.

If the lathe and the attached axle standard need to be calibrated, it is necessary to move a calibrated axle standard from another base in order to prevent it from being declared as not suitable due to not having the pertinent calibration certificate. Moreover, due to the high weight and volume thereof, the axle standards are usually left in areas of the workshop wherein they do not interfere with the normal activities of the workshop; and therefore, it is normal for the axle standard to be left outdoors.

Both the corrosion to which they are subjected by being exposed to the outdoors and the inadequate handling they suffer from during successive transport operations mean that it is frequently necessary to then machine the axle standard in order to restore the normal features thereof and perform the corresponding calibration. Transportation costs, machining costs and calibration costs for these axle standards are high.

### DESCRIPTION OF THE INVENTION

The object of the invention consists of an axle standard valid for different track gauges for use in the calibration of underfloor wheel lathes. To do so, the standard is made up of a set of central axles which are interchangeable with each other, and corresponding side wheels which are able to be temporarily linked to each of said axles. The respective axles have different lengths according to the different track gauges currently existing in Spain, such that when both wheels are joined, the resulting standard has a total gauge of 1668 mm, 1435 mm and 1000 mm, respectively.

Both the axles and the wheels are respectively equipped with fastening elements and joining elements, which can be coupled to the fastening elements. In a preferred embodiment of the standard, the joining elements and the fastening elements consist of corresponding male-female threaded joints. The option of equipping the axle with additional interlocking elements which ensure the positioning and anchoring between the axle and the wheels is also envisaged.

In the preferred embodiment thereof, the elements of the standard are made of aluminium, and are provided with a heat treatment in order to prevent corrosion and degradation. The resulting standard is light, with an approximate weight of 80 kg., and it is easily removable, in order to reduce times and costs for assembly and transportation. It is designed with a resistant capacity which is sufficient to withstand the buoyancy pressure necessary to perform the measurement of the running parameters.

As the main novelty with respect to the current system, the standard enables disposing a single element to be able to calibrate all of the underfloor wheel lathes. The incorporation of specific packaging is also envisaged as protection during the transportation and storage thereof. Likewise, the incorporation of transportation elements, such as a manual forklift or a commercial pallet jack, is foreseen if the distance between the unloading area and the underfloor wheel lathe is relatively long.

### DESCRIPTION OF THE DRAWINGS

As a complement to the description provided herein, and for the purpose of helping to make the features of the invention more readily understandable, according to a preferred practical exemplary embodiment thereof, said description is accompanied by a set of drawings which, by way of illustration and not limitation, represent the following:
Figure 1 shows a general perspective view of the adjustable standard located on a track, in which the main elements constituting it are seen.
Figure 2 shows an exploded upper perspective view of the standard.
Figure 3 shows a front view of a longitudinal cross section made in the standard of Figure 1, from which a detail of the wheel-axle joint has been taken out.
Figure 4 shows a detail of the coupling between a central axle and a wheel.
Figure 5 shows a detail of the immobilisation of the wheel on the central axle.

### PREFERRED EMBODIMENT OF THE INVENTION

A detailed explanation of a preferred exemplary embodiment of the object of the present invention is provided below with the help of the figures referred to above.

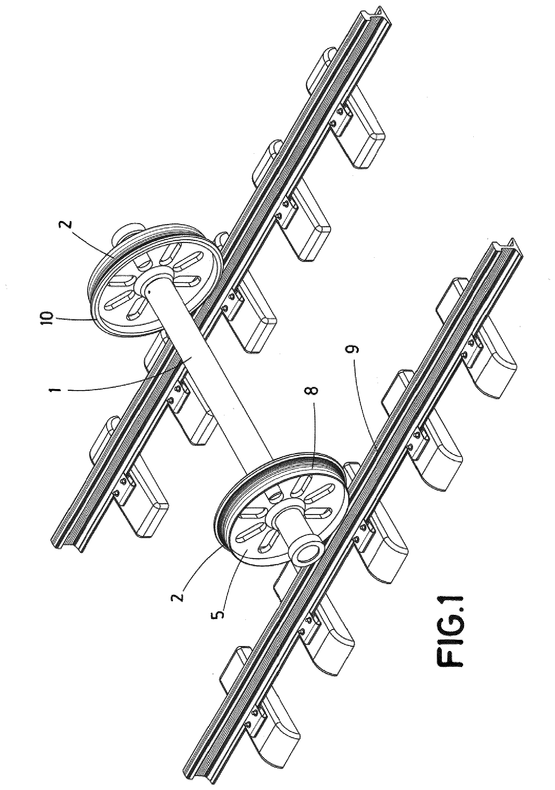

The calibration standard for underfloor wheel lathes described herein reproduces the geometry and the dimensions of railway axles of different longitudinal dimensions in order to perform a calibration prior to the machining of railway wheels. To do so, the standard is made up of a set of three central axles (1) which are interchangeable with each other, and corresponding side wheels (2) which can be temporarily linked to each of said axles (1). The respective axles (1) have different lengths according to the different track gauges, such that, when both wheels (2) are joined, the resulting standard has a total gauge of 1668 mm, 1435 mm and 1000 mm, respectively. Figure 1 illustrates a standard located on a track, made up of one of the axles (1) and the two lateral wheels (2) linked thereto.

Each of the axles (1) is made up of a body with essentially tubular geometry having respective ends (3), at each of which a corresponding fastening element (4) is located, which in this preferred embodiment is a female thread.

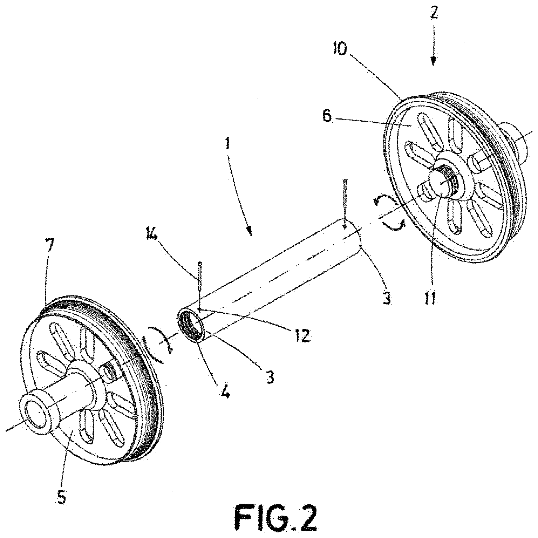

In turn, each of the wheels (2) has a front face (5), a rear face (6) and a side face (7). The front face (5) is intended to face towards the outside, while the rear face (6) is intended to face one of the ends (3) of the axle (1). The side face (11) likewise has a tread (8), intended to be in contact with a rail (9), and a perimetral flange (10) for centring the position on said rail (9), as seen in Figure 2.

From a central sector of the rear face (6) of each wheel (2), a joining element (11) begins which can be coupled in the fastening element (4) of each end (3) of the axle (1) in order to make up the standard. In this preferred embodiment, the joining element (11) of the wheel (2) is a prominent sector equipped with a male thread and dimensioned for the coupling thereof with the female thread of the axle (1).

The standard additionally comprises interlocking elements to ensure the anchoring and securing between the wheels (2) and each of the axles (1). In the preferred embodiment described herein, said interlocking elements are made up of first through holes (12), made at the ends (3) of each of the axles (1), second through holes (13), made in the prominent sector of the wheel (2), and pins (14).

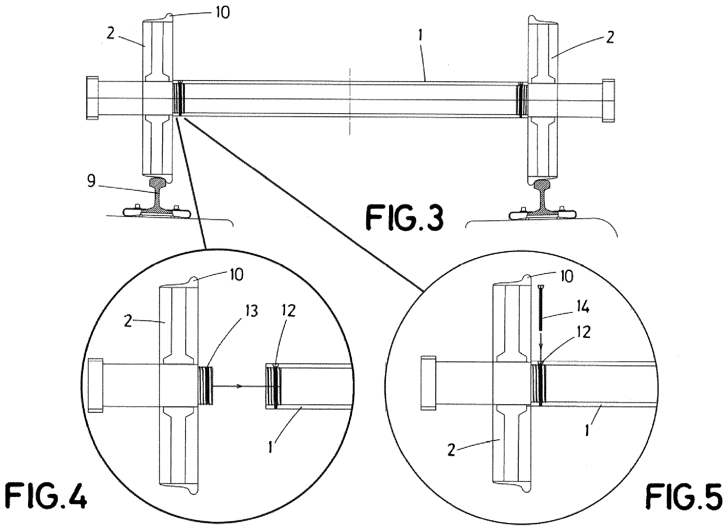

Figure 3 shows a front view of a longitudinal cross section made in the standard of Figure 1. When a standard with a certain length is to be obtained, the corresponding axle (1) is chosen and the two wheels (2) are then coupled. The correct coupling between the fastening element (4) and the joining element (11) makes it so the first (12) and second holes (13) stay facing each other and are aligned, such that the introduction of the pin (14) immobilises the wheel (2) on the axle (1), as illustrated in Figures 4 and 5.

When it is necessary to modify the length of the standard, the pins (14) are then removed and the wheels (2) are then uncoupled, in order to be subsequently coupled and immobilised once again on the appropriate axle (1).

## Claims

1. A calibration standard for underfloor wheel lathes used in the machining of railway wheels, **characterised in that** it comprises:
- a set of at least two axles (1) with different lengths, according to different sizes of railway tracks and being interchangeable with each other, which are provided with a fastening element (4) at the ends (3) thereof, and
- corresponding wheels (2) which have a front face (5), a rear face (6) and a side face (7) whereon a tread (8) and a perimetral flange (10) are defined, incorporating, in the rear face (6) of each wheel (2), a centred joining element (11) which can be coupled to the fastening element (4) of each end (3) of the axle (1) in order to make up an assembly formed by said wheels (2) and one of the axles (1), having dimensions according to each track gauge.

2. The calibration standard according to claim 1, **characterised in that**:
- the axle (1) has a through tube configuration, and the fastening element (4) is a female thread defined at the ends (3) of the axle (1), and
- the joining element (11) of the wheel (2) is a prominent sector equipped with a male thread with dimensions suitable for the coupling thereof in the female thread of the axle (1).

3. The calibration standard according to claim 1, **characterised in that** it additionally comprises interlocking elements which ensure the anchoring between the wheels (2) and the axles (1).

4. The calibration standard according to claims 2 and 3, **characterised in that** the interlocking elements comprise:
- a pin (14)
- first through holes (12), made at the ends (3) of each of the axles (1), and
- second through holes (13), made in the prominent sector of the wheel (2) configured to face the first holes (12) and wherein the pin (14) penetrates in order to ensure the anchoring between the wheels (2) and the axle (1).

## Patentansprüche

1. Kalibrierstandard für Unterflur-Radsatz-Drehmaschinen, die bei der Bearbeitung von Eisenbahnrädern verwendet werden, **dadurch gekennzeichnet, dass** er Folgendes umfasst:
- einen Satz von mindestens zwei Achsen (1) mit unterschiedlichen Längen, gemäß der unterschiedlichen Größen der Eisenbahnschienen und gegeneinander austauschbar, die an ihren Enden (3) mit einem Befestigungselement (4) bereitgestellt sind, und
- entsprechende Räder (2), die eine vordere Fläche (5), eine hintere Fläche (6) und eine Seitenfläche (7) aufweisen, auf denen ein Profil (8) und ein Umfangsflansch (10) definiert sind, die in der hinteren Fläche (6) jedes Rades (2) ein zentriertes Verbindungselement (11) integrieren, das mit dem Befestigungselement (4) jedes Endes (3) der Achse (1) gekoppelt sein kann, um eine Baugruppe zu bilden, die durch die Räder (2) und eine der Achsen (1) gebildet wird, die Abmessungen gemäß jeder Spurweite aufweist.

2. Kalibrierstandard nach Anspruch 1, **dadurch gekennzeichnet, dass**:
- die Achse (1) eine Durchsatzrohrkonfiguration aufweist und das Befestigungselement (4) ein Innengewinde ist, das an den Enden (3) der Achse (1) definiert ist, und
- das Verbindungselement (11) des Rades (2) ein vorspringender Abschnitt ist, der mit einem Außengewinde mit Abmessungen ausgestattet ist, die für die Kupplung davon im Innengewinde der Achse (1) geeignet sind.

3. Kalibrierstandard nach Anspruch 1, **dadurch gekennzeichnet, dass** dieser zusätzlich Eingriffselemente umfasst, welche die Verankerung zwischen den Rädern (2) und den Achsen (1) sicherstellen.

4. Kalibrierstandard nach einem der Ansprüche 2 und 3, **dadurch gekennzeichnet, dass** die Eingriffselemente umfassen:
- einen Stift (14)
- erste Durchgangslöcher (12), die an Enden (3) jeder der Achsen (1) hergestellt sind, und
- zweite Durchgangslöcher (13), die in dem vorspringenden Abschnitt des Rades (2) hergestellt sind, das zum Weisen zu den ersten Löchern (12) konfiguriert ist und wobei der Stift (14) eindringt, um die Verankerung zwischen den Rädern (2) und der Achse (1) sicherzustellen.

## Revendications

1. Norme d'étalonnage pour tours à essieux en fosse utilisées dans l'usinage des roues ferroviaires, **caractérisée en ce qu'**elle comprend :
- un ensemble d'au moins deux axes (1) de longueurs différentes, selon différentes tailles de voies ferroviaires et étant interchangeables entre eux, qui sont pourvus d'un élément de fixation (4) à leurs extrémités (3), et
- des roues correspondantes (2) qui ont une face avant (5), une face arrière (6) et une face latérale (7) sur lesquelles sont définis une bande de roulement (8) et un rebord périphérique (10), incorporant, dans la face arrière (6) de chaque roue (2), un élément de jonction centré (11) qui peut être couplé à l'élément de fixation (4) de chaque extrémité (3) de l'axe (1) afin de constituer un ensemble formé par lesdites roues (2) et l'un des axes (1), ayant des dimensions en fonction de chaque écartement de voies.

2. Norme d'étalonnage selon la revendication 1, **caractérisée en ce que** :
- l'axe (1) a une configuration de tube traversant, et l'élément de fixation (4) est un filetage femelle défini aux extrémités (3) de l'axe (1), et
- l'élément de jonction (11) de la roue (2) est un secteur proéminent équipé d'un filetage mâle avec des dimensions adaptées à son accouplement dans le filetage femelle de l'axe (1).

3. Norme d'étalonnage selon la revendication 1, **caractérisée en ce qu'**elle comprend en outre des éléments d'emboîtement qui assurent l'ancrage entre les roues (2) et les axes (1).

4. Norme d'étalonnage selon les revendications 2 et 3, **caractérisée en ce que** les éléments d'emboîtement comprennent :
- une goupille (14)
- des premiers trous traversants (12), réalisés aux extrémités (3) de chacun des axes (1), et
- des deuxièmes trous traversants (13), réalisés dans le secteur proéminent de la roue (2) configuré pour faire face aux premiers trous (12) et dans laquelle la goupille (14) pénètre afin d'assurer l'ancrage entre les roues (2) et l'axe (1).
